# EUROPÄISCHE PATENTSCHRIFT

(11) **EP 0 383 295 B1**
(45) Veröffentlichungstag und Bekanntmachung des Hinweises auf die Patenterteilung: **20.10.1993**
(21) Anmeldenummer: 90102885.2
(22) Anmeldetag: 14.02.1990
(51) Int. Cl.: B41F 31/00

(54) **Temperiereinrichtung für Druckmaschinen**
Temperature-regulating device for printing machines
Dispositif pour contrôler la température pour machines d'impression

(30) Priorität: 17.02.1989 DE 3904854
(43) Veröffentlichungstag der Anmeldung: 22.08.1990
(73) Patentinhaber: Heidelberger Druckmaschinen Aktiengesellschaft, D-69115 Heidelberg (DE)
(72) Erfinder: Jagusch, Siegfried, D-8649 Wallenfels (DE)

(56) Entgegenhaltungen:
- DE-B- 2 055 584
- DE-U- 8 813 088

## Beschreibung

Die Erfindung betrifft eine Temperiereinrichtung zur Regelung der Temperatur einer Farbwalze und/oder weiterer Walzen eines Farbwerkes einer Offset-Druckmaschine mit mehreren Druckwerken bzw. Farbwerken mittels eines über schaltbare Teilkreisläufe durch die Walze gepumpten Temperiermittels, wobei ein Teilkreislauf einen Wärmetauscher enthält, sowie für eine Aufheizphase eine zusätzliche Heizeinrichtung vorgesehen ist und durch eine Regelschaltung, der die Signale von Walzenzuström- und -rückströmtemperatur zuführbar sind, Stellglieder der Temperiereinrichtung betätigbar sind.

Eine solche Temperiereinrichtung ist aus der DE 23 60 611 A1 bekannt. In der darin beschriebenen Druckmaschine ist eine Einrichtung zur Konstanthaltung der Volltondichte vorgesehen, die aus einer der Duktorwalze zugeordneten Temperiereinrichtung sowie aus einer Einrichtung zur Konstanthaltung des gedeckten Flächenanteils der Rasterpartien besteht. Die letztere Einrichtung weist eine weitere der Verreibwalze zugeordnete Temperiereinrichtung auf. Die Verreibwalzen und die Duktorwalze werden dabei entweder über einen gemeinsamen Kühlkreis oder über getrennte Kühlkreise gespeist. Das Temperiermittel wird über den Rücklauf jeweils einem Behälter zugeführt, in dem es aufgeheizt oder mittels eines Kühlkreises abgekühlt wird. Gesteuert werden der Heizkreis und der Kühlkreis von einem Regler in Abhängigkeit eines eingegebenen Sollwertes und gemessener Rücklauftemperaturen sowie der an der Oberfläche einer Verreibwalze ermittelten Temperatur.

Die Bedeutung der Temperaturregelung in einem Farbwerk einer Offset-Druckmaschine ist weiterhin in dem Forschungsbericht 3.220 der "Fogra", Deutsche Forschungsgesellschaft für Druck- und Reproduktionstechnik e.V., 1977, beschrieben. In einem Versuchsaufbau wurde die Temperatur von Farb- und Feuchtwerkwalzen bei nichttemperierter und bei temperierter Druckmaschine erfasst und die Auswirkungen auf die Qualitätsschwankungen analysiert.

Weiterhin ist es aus der JP 60-161 152 A bekannt, zur Vermeidung unregelmäßer Farbdichte beim Offsetdruck aus einem Kühltank reguliert in Abhängigkeit der Vorlauftemperatur und der Oberflächentemperatur Temperierflüssigkeit zu entnehmen und damit eine zu kühlende Walze einzustellen. Dabei wird durch ein Steuerventil die Kühlflüssigkeit dem Vorlaufkreis zugeführt. Eine Steuerung des Ventiles in Abhängigkeit weiterer Störgrößen, insbesondere unter Berücksichtigung der Rücklauftemperatur des Temperiermittels erfolgt dabei nicht.

Motorgesteuerte Mehrwegemischer, wie Drei- und Vierwegemischer sind in Regelsystemen von Zentralheizungen in verschiedensten konstruktiven Ausgestaltungsformen bekannt. Bei allen Mischern wird aus dem Rücklauf des Heizungssystems ein Teil des rückströmenden Heizungswassers entnommen und dem von der Kesselanlage kommenden heißen Heizungswasser zugesetzt, um eine Temperatur des Heizungswassers im Vorlauf zu erreichen, die der jeweils z. B. vorhandenen Außentemperatur außerhalb des Gebäudes angepaßt ist, um eine gleichmäßige Beheizung des Raumes zu ermöglichen. Ein solches Mischerstellglied ist aus der DE 32 07 427 C2 bekannt und weist eine zylinderische Mischkammer mit einer drehbar darin gelagerten Mischklappe auf, die über eine Antriebswelle mit einem Motor verbunden ist. Axial neben der Mischkammer ist eine zylinderische Bypass-Kammer vorgesehen mit in den Rücklauf und den Heizungsvorlauf mündenden Öffnungen. Das Bypass-Stellglied ist ein mit der Antriebswelle drehfest verbundener Drehschieber, dessen Winkelstellung in bezug auf die Mischklappe voreinstellbar ist. Mischer haben den Vorteil, daß einerseits durch die Stellung der Mischklappe eine schnelle Temperaturregelung und andererseits durch das Mischverhältnis eine Feinregulierung des Vorlaufes möglich ist.

Für den Mehrfarbendruck werden in Reihenbauweise in der Regel, je nach Farbendruck, zwei, drei, vier oder fünf gleiche Anlagen hintereinander angeordnet. Bei Vierfarbendruck besteht die Maschine aus vier Anordnungen zum Ausdrucken der Farben: Gelb, Magenta, Cyan und Schwarz bzw. Gelb, Rot, Blau und Schwarz. Als Druckplatte werden Kunststoff-, Zink- oder Aluminiumplatten sowie mehrschichtige Metallplatten verwendet.

Die Wichtigkeit der Farbwerkstemperierung ist allgemein bekannt. Sie hat Einfluß auf den Farbfluß, die Pigmentierung der aufgetragenen Farbe, den Farbauftrag, die Farbdichte und auf die subtraktive Farbmischung. Die optimalen Farbverarbeitungstemperaturen liegen in der Regel im Bereich der Raumtemperatur bzw. über oder unter dieser, wodurch erhebliche Schwierigkeiten bei der Farbwerkstemperierung bestehen. Einfluß auf die Farbwerkstemperatur haben insbesondere die Rotationsgeschwindigkeit der Zylinder des Druckwerks, des Farbwerkes und des Feuchtwerkes, Reibungsverluste zwischen den Zylindern und dem zu bedruckenden Papier und die Temperatur innerhalb des Raumes.

Die Druckqualität wird ferner bestimmt durch die Qualität des Druckpapiers, das Feuchtmittel und dessen Anteil und durch die farbenspezifischen Werte. Sie kann durch entsprechende Farbtemperatur beim Abklatsch verbessert werden.

Das Kühlen und Temperieren von Farbwalzen in Farbwerken, insbesondere von Verreibewalzen, ist beispielsweise aus der DE-PS 5 51 432 bekannt.

Die Möglichkeiten und Ergebnisse einer Farbwerkstemperierung sind auch in der wissenschaftlichen Untersuchung "Temperaturmessungen an Walzenfarbwerken" diskutiert worden, abgedruckt in den Mitteilungen der Forschungsgesellschaft "Druckmaschinen", 3/72.

Eine besondere Ausgestaltung der Farbwalze zur weitestgehenden Konstanthaltung der Farbtemperatur bei Betriebsunterbrechungen ist in der DE 26 58 380 B2 beschrieben. Es ist ferner bekannt, daß kurzfristige Maschinenstops erhebliche Temperaturänderungen im Farbwerk bedingen. Die größten Temperaturschwankungen ergeben sich bei niedrigen und hohen Einlauftemperaturen des Temperiermittels, vorzugsweise Wasser. Eine Verbesserung ist erzielbar, wenn das Temperiermittel unter die Umgebungstemperatur des Raumes gebracht wird. Die Einhaltung der Temperatur des Temperiermittels knapp unter Raumtemperatur ist aber weder zu gewährleisten noch entspricht diese Temperatur in der Regel der Verarbeitungstemperatur der Farbe. Selbst in modernen Druckereien bleibt die Raumtemperatur im Laufe des Tages nicht konstant, da oftmals keine Klimaanlagen vorhanden bzw. die vorhandenen unterdimensioniert sind. Während des Tages schwanken die Raumtemperaturen mit den Außentemperaturen. Es ist für diesen Betriebszustand diskutiert worden, die Einlauftemperatur entsprechend zu regeln. Dies mindert zwar Temperaturschwankungen, würde aber andererseits langzeitige Änderungen der Farbtemperatur ähnlich denen von nicht temperierten Farbwerken zur Folge haben, wodurch die Farbwerkstemperierung an sich in Frage gestellt ist. Temperierte Farbwerke haben sich deshalb bisher nicht durchgesetzt.

Weiterhin ist aus der DE 32 28 124 C2 eine Kühlanlage für Druckmaschinen bekannt, die mit einer Kältemaschine gekoppelt ist. Das dem Rücklauf entnommene Temperiermittel wird dabei über Wärmetauscher und eine Wärmepumpe zur Raumheizung verwendet.

Ausgehend von dem beschriebenen Stand der Technik liegt der Erfindung die Aufgabe zugrunde, eine Temperiereinrichtung für ein Druckwerk eingangs beschriebener Art so auszubilden, daß hohe Regelgüte bei schnellem Regelverhalten und unter Einbeziehung beaufschlagbarer Störgrößen die Farbwerkstemperatur individuell auf die optimalen Verarbeitungstemperaturen ohne Eingriff in die Druckmaschine hinregelbar ist.

Die Aufgabe löst die Erfindung durch die im Anspruch 1 angegebene technische Lehre. Danach ist ein geschlossener Temperiermittelkreislauf über einen motorgesteuerten Mischer, vorzugsweise Vierwegemischer, vorgesehen, der in Abhängigkeit von der Sollvorgabe und den ermittelten Temperaturen an der Oberfläche der Farbwalze oder sonstiger Walzen des Farbwerkes und Druckwerkes sowie der festgestellten Vor- und Rücklauftemperatur so gesteuert wird, daß keine sprunghaften Temperaturänderungen auftreten und auf eine konstante Oberflächentemperatur der Farbwalze hingeregelt wird, die der Farbtemperatur gleichzusetzen ist. Hierzu sind ein oder mehrere Temperatursensoren verteilt in unmittelbarer Nähe der Oberfläche der Farbwalze oder anderer Walzen berührungsfrei angeordnet. Zweckmäßigerweise werden diese Sensoren zum Raum hin abgeschirmt, so daß nur die tatsächliche Oberflächentemperatur als Abstrahlungswärme erfaßt wird, die von der Walze bzw. der Farbe abgegeben wird. Derartige Maßnahmen zur Abschirmung durch ein Gehäuse zu dem Raum hin, der für die Temperaturerfassung uninteressant ist, sind bekannt. Zugleich werden aber durch die Abstandsanordnung der Sensoren zur Oberfläche der Farbwalze bzw. der Farbe oder einer anderen Walze die Einflüsse der Umgebungstemperatur in unmittelbarer Nähe der Walze mit erfaßt und ausgewertet. Bei langsam laufenden Maschinen ist die Zuführung von gekühlten Temperiermitteln nur in ganz geringen Mengen erforderlich, zumal die Verarbeitungstemperatur in der Regel über der Raumtemperatur liegt und die Reibungsverluste zu keiner nennenswerten Erwärmung des Temperiermittels führen.

Die entsprechenden Anteile werden über den Mischer zugeführt. Bei schnell laufenden Maschinen, die hohe Reibungswärmeverluste aufweisen, ist eine mengenmäßig höhere Beimischung von Kühlmittel erforderlich. Entsprechend den Temperaturschwankungen ist dabei stets die dem Rücklauf entnommene Menge des Temperiermittels beigemischt. Es enstehen auch keine Temperatursprünge, die sich merklich auf die Qualität des Farbdrucks auswirken.

Es hat sich gezeigt, daß weitere Störgrößen, wie eingangs beschrieben, z. B. das Feuchtmittel, mit in die Druckqualität eingehen, ebenso das verwendete Papier, welches grundsätzlich verschiedene Druckeigenschaften haben kann, so daß ein optimaler Druck nur unter Einbeziehung auch dieser Faktoren in das Regelsystem möglich ist. So ist es z. B. erforderlich, bei einem Vierfarbendruck unter Verwendung einer bestimmten Papierqualität unter Vorgabe der Konstante für diese Papierqualität und unter Vorgabe von Faktoren für bestimmte Feuchtmittelanteile und unter Berücksichtigung der Faktoren der eingesetzten Farbe die Farbwerke der aneinandergereihten Offset-Druckmaschinen auf verschiedene Temperaturen einzustellen, z. B. 24,2° C Schwarz, 24° C Cyan, 26,3° C Magenta, 24° C Gelb. Bei Verwendung eines anderen Papiers bzw. einer anderen Farbe sind z. B. die Werte jeweils auf 24,5° C, 24,5° C, 26,7° C und 24,5° C einzustellen.

Die Angaben zeigen, wie genau ein Regelsystem funktionieren muß, um eine höchstmögliche Druckqualität zu erzielen. Mit der Erfindung ist es erstmals gelungen, eine störgrößenabhängige Regelung einzuführen, die nahezu temperatursprungfrei eine gleichmäßige Temperierung des Farbwerkes bzw. des Druckwerkes einer Druckmaschine ermöglicht, wobei Konstanten als Störgrößen vorgegeben oder Störgrößen durch Messung der Farbdichte, der Raumtemperatur, der Luftfeuchtigkeit, des Feuchtmittelanteils u.a. mit berücksichtigt werden.

Ein Vorteil ist die bessere Kontrolle des Alkoholgehaltes, wodurch eine Senkung des bisher üblichen Alkoholgehaltes möglich ist.

Vorteilhafte Ausgestaltungen der Erfindung sind in den Unteransprüchen angegeben.

Die Verwendung einer Mikroprozessorsteuereinheit im Steuergerät gemäß Anspruch 7 ermöglicht, daß alle konstanten Störgrößen vorgegeben werden können, so daß eine einfache Temperaturerfassung gemäß Anspruch 1 ausreichend ist, um eine hohe Druckqualität zu erzielen. Anstelle der konstanten Vorgaben, die in der Regel auf Erfahrungswerten basieren und von Maschine zu Maschine unterschiedlich sind, können aber auch aufwendige Sensoranordnungen vorgesehen sein, wie sie in den Ansprüchen 5 und 6 angegeben sind, um den Feuchtanteil des emulgierten und adsorbierten Feuchtmittels sowie die Farbdichte zu ermitteln und diese als störgrößenabhängige Information im Regelsystem mit zu beachten. Der Mikroprozessor der Prozessorsteuereinheit ist zur Verarbeitung dieser Vorgaben entsprechend programmiert. Anhand des Rechenprogramms werden dabei die Stellgrößen bzw. das Steuersignal ermittelt und zur Steuerung des Mischermotors ausgegeben, damit die gewünschte Temperierung der jeweiligen Farbwalze erreicht wird. Nach Anspruch 4 ist weiterhin vorgesehen, daß durch Pumpensteuerung das Temperiermittel beschleunigt oder geschwindigkeitsreduziert durch die Farbwalze bzw. andere Walzen, z. B. eine Kühlwalze, gepumpt wird. Dies hat den Vorteil, daß im Falle eines Maschinenstops auf die eingestellte Temperatur besser hingeregelt werden kann, da die Reibungsverluste nicht mehr eingehen und eine schnelle Anpassung erfolgen muß. Die jeweiligen Temperaturwerte und sonstige gemessene Werte können darüber hinaus auch angezeigt werden. Hierzu sind Displaytreiber und Anzeigeelemente in dem Steuergerät oder in einer angeschlossenen Anzeigeeinheit vorgesehen.

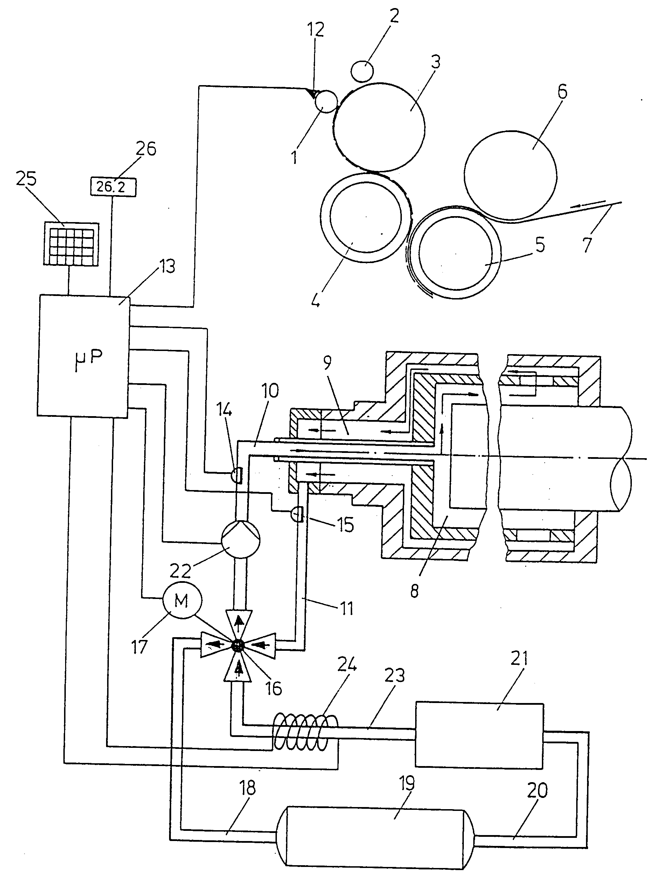

Die Erfindung wird nachfolgend anhand eines in der Abbildung schematisch dargestellten Ausführungsbeispiels näher beschrieben.

In der einzigen Abbildung ist schematisch die Zylinderanordnung einer Offset-Druckmaschine dargestellt. Diese Anordnung besteht aus einer Farbwalze 1, einer Feuchtwalze 2, einem Plattenzylinder 3, einem Gummizylinder 4, einem Druckzylinder 5 und einer Anlegetrommel 6, über die z. B. ein Papierbogen 7 zugeführt wird. Die Funktion der Zylinderanordnungen ist eingangs beschrieben worden. Herausgestellt ist unterhalb der Zylinderanordnung die Farbwalze 1 im Teilschnitt separat eingezeichnet. Anhand der darin eingezeichneten Pfeile ist zu erkennen, daß durch eine Mitteneinführung das Temperiermittel in einen Einlaufzylinder 8 fließt und ein Kammersystem in der Farbwalze durchdringt und über einen Auslaufzylinder 9 wieder abfließt. Der Einlaufzylinder 8 und der Auslaufzylinder 9 münden in Zulaufrohre 10 und Abflußrohre 11. Innerhalb der Druckmaschine ist oberhalb der Oberfläche der Farbwalze 1 ein Temperatursensor 12 angeordnet, der die Oberflächentemperatur der Farbe und damit die der Farbwalze ermittelt. Der gemessene Temperatur-Istwert wird über eine elektrische Zuleitung dem Steuergerät 13 zugeführt, in welchem sich die Regelschaltung nach der Erfindung befindet. Des weiteren ist im Zulaufrohr 10 ein Temperatursensor 14 vorgesehen, mit dem die Vorlauftemperatur des Temperiermittels erfaßt wird. Ferner ist ein dritter Temperatursensor 15 im Rücklaufrohr vorgesehen, mit dem die Temperatur des rückfließenden Temperiermittels erfaßt wird. Beide Rohrleitungen enden auf den Eingängen eines Vierwegemischers 16, der von einem Motor 17 gesteuert wird. Hierbei handelt es sich z. B. um einen Schrittmotor, der die Mischventilanordnung innerhalb des Vierwegemischers 16 schrittweise herstellt. Die weiteren Eingänge des Vierwegemischers 16 sind zum einen über das Abflußrohr 18 mit einem Wärmetauscher 19 verbunden, in dem Abwärme aus dem Rücklauf transferiert wird. Das so gekühlte Temperiermittel fließt über das Rohr 20 in den Behälter 21 und kann dort bedarfsweise entnommen und dem Kreislauf zugeführt werden. Zu diesem Zweck ist eine Pumpe 22 in der Rohrleitung 23 vorgesehen, die durch ein steuerbares Heizelement 24 geführt ist, um das Temperiermittel im Bedarfsfall vorheizen zu können. Die Steuerung der Heizeinrichtung 24 erfolgt durch das Steuergerät 13, zu welchem Zweck die schematisch eingezeichneten Heizspiralen mit diesem verbunden sind. In dem Steuergerät befindet sich ein Mikrocomputer, d.h. ein Rechner mit einem Mikroprozessor, der nach einem vorgegebenen Programm anhand von über eine Tastatur 25 eingegebenen Konstanten und der ermittelten Temperaturwerte an der Oberfläche der Walze 1 und des Vor- und Rücklaufs die Stellgrößen zur Steuerung des Motors 17 des Vierwegemischers 16 ermittelt und das entsprechende Steuerkorrektursignal abgibt, damit die Vorlauftemperatur so eingestellt ist, daß die Temperatur an der Oberfläche der Farbwalze 1 konstant bleibt. Als konstante Störgrößen können dabei z. B. eingegeben werden: Papierqualitätsfaktor, Feuchtanteil, Raumlufttemperatur, Raumluftfeuchte, Farkonstante und Farbdichte. Diese Vorgaben, die auch meßtechnisch erfaßbar sind und dann über entsprechende Eingänge eingelesen und ausgewertet werden, werden bei der Ermittlung der Stellgröße berücksichtigt. Ebenso kann das Programm für das Anlaufen der Anlage nach einem bestimmten Kurvenverlauf programmiert eine Aufheizphase ablaufen lassen, bevor die Zylinder in Rotation gebracht werden. Zur Anzeige des Istwertes der Temperatur an der Oberfläche der Meßwalze ist ferner ein Anzeigeelement vorgesehen, das Bestandteil des Steuergerätes sein kann oder separat weithin sichtbar für den Drucker angeordnet ist. Durch Umsteuerung über die Tastatur 25 können auch die übrigen Meßwerte sowie Störgrößen und Sollvorgaben, die eingegeben worden sind, angezeigt werden.

## Patentansprüche

1. Temperiereinrichtung zur Regelung der Temperatur einer Farbwalze und/oder weiterer Walzen eines Farbwerkes einer Offset-Druckmaschine mit mehreren Druckwerken bzw. Farbwerken mittels eines über schaltbare Teilkreisläufe durch die Walze gepumpten Temperiermittels, wobei ein Teilkreislauf einen Wärmetauscher enthält, sowie für eine Aufheizphase eine zusätzliche Heizeinrichtung vorgesehen ist und durch eine Regelschaltung, der die Signale von Walzenzuström- und -rückströmtemperatur zuführbar sind, Stellglieder der Temperiereinrichtung betätigbar sind, **gekennzeichnet durch** folgende Merkmale:
daß in jedem Farbwerk in unmittelbarer Nähe der Walze (1) die Temperatur an der Oberfläche der jeweiligen Walze (1) erfaßbar ist;
daß ein Steuergerät (13) mit jeweils einer Regelschaltung für jedes Farbwerk vorgesehen ist, welches Steuergerät (13) eine Prozessorsteuereinheit aufweist, die nach einem Programm je eine Steuergröße in Abhängigkeit von den gemessenen Temperaturwerten, der Sollwertvorgabe und vorgegebener beaufschlagbarer Störgrößen für jedes Druckwerk ermittelt, und
daß die jeweilige Steuergröße je einen motorgesteuerten Mischer (16, 17) steuert, der den direkt aus Walzenzuström- und -rückströmleitung (8, 9; 10, 11) gebildeten ersten Teilkreislauf (8, 9, 10, 11) mit einem über den Wärmetauscher gekühlten Temperiermittel führenden zweiten Teilkreislauf (18, 20, 23) strömend verbindet und daß jeder temperierten Walze (1) ein solcher die Teilkreisläufe (8, 9, 10, 11, 18, 20, 23) verbindender motorgesteuerter Mischer (16, 17) zugeordnet ist.

2. Temperiereinrichtung nach Anspruch 1, **dadurch** **gekennzeichnet,** daß die Heizeinrichtung (24) in der Zu- und/oder Rückströmung vorgesehen ist, die das Temperiermittel bedarfsweise auf eine bestimmte voreinstellbare Temperatur vorheizt.

3. Temperiereinrichtung nach Anspruch 1 oder 2, **dadurch gekennzeichnet**, daß der zweite Teilkreislauf (18, 20, 23 den Wärmetauscher (19) und einen Vorratsbehälter (21) enthält.

4. Temperiereinrichtung nach einem der vorhergehenden Ansprüche, **dadurch gekennzeichnet**, daß in dem Teilkreislauf eine drehzahlgesteuerte Pumpe (22) zur Veränderung der Durchflußgeschwindigkeit des Temperiermittels vorgesehen ist, die durch von der Regelschaltung erzeugte Stellsignale steuerbar ist.

5. Temperiereinrichtung nach einem der vorhergehenden Ansprüche, **dadurch gekennzeichnet**, daß ein Sensor an der Feuchtmittelwalze zur Erfassung der Temperatur des Feuchtmittels vorgesehen ist und daß der gemessene Wert als weitere Störgröße der Regelschaltung zur Beeinflussung der Steuergröße zugeführt wird.

6. Temperiereinrichtung nach einem der Ansprüche 1 bis 4, **dadurch gekennzeichnet**, daß eine photoelektrische Meßeinrichtung zur Ermittlung der Farbdichte vorgesehen ist, und daß der gemessene Wert als weitere Störgröße der Regelschaltung zugeführt wird.

7. Temperiereinrichtung nach einem der vorhergehenden Ansprüche, **dadurch gekennzeichnet**, daß die weiteren Störgrößen Faktoren wie Raumtemperatur, Luftfeuchtigkeit, Feuchtmittelanteil, Farbdichte, Farbverarbeitungsfaktoren und Papierkonstante sind, und daß das Steuergerät eine Aufheizkurve während des Anlaufs des Druckwerks vorgibt.

8. Temperiereinrichtung nach Anspruch 7, **dadurch** **gekennzeichnet**, daß die Störgrößen als feste Faktoren und die Solltemperatur mit einer Eingabetastatur (25) eingebbar sind.

9. Temperiereinrichtung nach einem der vorhergehenden Ansprüche, **dadurch gekennzeichnet**, daß mit der Regelschaltung eine Anzeige (26) für die Ist-Temperatur, die eingegebenen Faktoren und die jeweiligen Messwerte vorgesehen ist, die abrufbar in einem Speicher der Regelschaltung abgelegt oder direkt vom jeweiligen Meßfühler abrufbar sind.

## Claims

1. Temperature-influencing equipment for the regulation of the temperature of an inking roller and/or further rollers of an inking mechanism of an offset printing machine with several printing mechanisms or inking mechanisms by means of a temperature-influencing medium pumped through the roller by way of switchable partial circuits, wherein one partial circuit contains a heat exchanger as well as an additional heat equipment being provided for a heating-up phase and setting members of the temperature-influencing equipment actuable by a regulating circuit, to which the signals of the roller forward and return flow temperature are feedable:
characterised by the following features:
The temperature at the surface of the roller (1) is detectable in the immediate proximity of the respective roller (1) in each inking mechanism;
a control device (13) with a respective regulating circuit is provided for each inking mechanism and comprises a processor control unit which - according to a program and for each printing mechanism - ascertains a respective control magnitude in dependence on the measured temperature values, the preset target value and preset influenceable disturbance variables and
the respective control magnitude controls a respective motor-controlled mixer (16, 17), which connects the first partial circuit (8, 9, 10, 11) formed directly of the roller forward and return flow ducts (8, 9; 10, 11) in terms of flow with a second partial circuit (18, 20, 23) carrying temperature-influencing medium cooled by way of the heat exchanger and each temperature-influenced roller (1) is associated with one such motor-controlled mixer (16, 17) connecting the partial circuits (8, 9, 10, 11, 18, 20, 23).

2. Temperature-influencing equipment according to claim 1, characterised thereby, that the heating equipment (24) is provided in the forward flow and/or the return flow and in case of need preheats the temperature-influencing medium to a certain presettable temperature.

3. Temperature-influencing equipment according to claim 1 or 2, characterised thereby, that the second partial circuit (18, 20, 23) contains the heat exchanger (19) and a stock container (21).

4. Temperature-influencing equipment according to one of the preceding claims, characterised thereby, that a pump (22) of controlled rotational speed is provided in the partial circuit for variation of the speed of throughflow of the temperature-influencing medium and is controllable by setting signals produced by the regulating circuit.

5. Temperature-influencing equipment according to one of the preceding claims, characterised thereby, that a sensor is provided at the damping medium roller for the detection of the temperature of the damping medium and that the measured value is fed as further disturbance variable to the regulating circuit for influencing the control magnitude.

6. Temperature-influencing equipment according to one of the claims 1 to 4, characterised thereby, that a photo-electric measuring equipment is provided for ascertaining the colour density and that the measured value is fed as further disturbance variable to the regulating circuit.

7. Temperature-influencing equipment according to one of the preceding claims, characterised thereby, that the further disturbance variables are factors such as room temperature, air humidity, proportion of damping medium, colour density, ink processing factors and paper constants and that the control device presets a heating-up characteristic during the starting-up of the printing mechanism.

8. Temperature-influencing equipment according to claim 7, characterised thereby, that the disturbance variables are enterable as fixed factors and the target temperature is enterable by an input keyboard (25).

9. Temperature-influencing equipment according to one of the preceding claims, characterised thereby, that with the regulating circuit, a display (26) is provided for the actual temperature, the entered factors and the respective measured values, which are recallably filed in a storage device of the regulating circuit or callable up directly from the respective measurement sensor.

## Revendications

1. Dispositif destiné à la régulation de la température d'un rouleau encreur et/ou d'autres rouleaux d'un mécanisme d'encrage d'une machine d'impression offset comprenant plusieurs groupes d'impression ou mécanismes d'encrage au moyen d'un agent de régulation de la température pompé dans les rouleaux en passant par des circuits partiels commutables, un circuit partiel comprenant un échangeur de chaleur tandis qu'un dispositif de chauffage additionnel est prévu pour une phase de montée en température, et des organes de réglage du dispositif de régulation de la température pouvant être actionnés par un circuit de régulation auquel peuvent être appliqués les signaux de la température du courant d'amenée et du courant de sortie dans les rouleaux, caractérisé en ce que:
la température à la surface du rouleau concerné (1) peut être détectée dans chaque mécanisme d'encrage à proximité immédiate du rouleau (1);
un dispositif de commande (13) comprenant un circuit de régulation pour chaque mécanisme d'encrage est prévu, lequel dispositif de commande (13) comprend une unité de commande à processeur qui détermine en fonction d'un programme une grandeur de commande dépendant des valeurs de température mesurées, des valeurs des données de consignes préalables et de grandeurs perturbatrices prédéterminées pouvant être appliquées à chaque groupe d'impression; et
les grandeurs de commande respectives commandent chacune un mélangeur (16, 17) commandé par moteur, qui relie directement le premier circuit partiel (8, 9, 10, 11) constitué directement par les conduites d'amenée et de sortie (8, 9; 10, 11) des rouleaux à un second circuit partiel (18, 20, 23) par lequel passe l'agent de régulation de la température refroidi par l'échangeur de chaleur, et en ce qu'un tel mélangeur (16, 17) commandé par moteur et reliant les circuits partiels (8, 9, 10, 11, 18, 20, 23) est associé à chaque rouleau (1) à température régulée.

2. Dispositif de régulation de la température selon la revendication 1, caractérisé en ce que le dispositif de chauffage (24) est prévu dans le courant d'amenée et/ou dans le courant de sortie, qui préchauffe l'agent de régulation de la température selon les besoins à une température pouvant être réglée à l'avance de façon prédéterminée.

3. Dispositif de régulation de la température selon la revendication 1 ou 2, caractérisé en ce que le second circuit partiel (18, 20, 23) comprend l'échangeur de chaleur (19) et un réservoir (21) d'alimentation.

4. Dispositif de régulation de la température selon l'une quelconque des revendications précédentes, caractérisé en ce qu'il est prévu dans le circuit partiel une pompe (22) dont la vitesse de rotation est commandée pour modifier la vitesse du courant de l'agent de régulation de la température, pompe qui peut être commandée par les signaux de réglage fournis par le circuit de régulation.

5. Dispositif de régulation de la température selon l'une quelconque des revendications précédentes, caractérisé en ce qu'un capteur est prévu sur le rouleau à agent de mouillage pour détecter la température de l'agent de mouillage et la valeur de la mesure est appliquée en tant que nouvelle grandeur perturbatrice du circuit de régulation pour avoir une influence sur la grandeur de commande.

6. Dispositif de régulation de la température selon l'une des revendications 1 à 4, caractérisé en ce qu'il est prévu un dispositif de mesure photoélectrique pour déterminer la densité de l'encre, et en ce que la valeur mesurée est appliquée en tant qu'autre grandeur perturbatrice au circuit de régulation.

7. Dispositif de régulation de la température selon l'une des revendications précédentes, caractérisé en ce que les autres grandeurs perturbatrices sont des facteurs tels que la température ambiante, l'humidité de l'air, la fraction d'agent mouillant, la densité de l'encre, les facteurs de traitement de l'encre et la constante du papier, et que le dispositif de commande détermine une courbe de montée en température pendant la mise en marche du groupe d'impression.

8. Dispositif de régulation de la température selon la revendication 7, caractérisé en ce que les grandeurs perturbatrices en tant que facteurs fixes et la température de consigne peuvent être entrées au moyen d'un clavier (25).

9. Dispositif de régulation de la température selon l'une des revendications précédentes, caractérisé en ce qu'il est prévu avec le circuit de régulation un affichage (26) de la température réelle, des facteurs entrés et des diverses valeurs des mesures, qui sont mises dans une mémoire du circuit de régulation d'où elles peuvent être appelées, ou être appelées directement depuis chaque détecteur de mesure.
